(19) Europäisches Patentamt / European Patent Office / Office européen des brevets

(11) **EP 4 583 066 A1**

(12) **EUROPEAN PATENT APPLICATION**

(43) Date of publication:
**09.07.2025 Bulletin 2025/28**

(21) Application number: **25150243.1**

(22) Date of filing: **03.01.2025**

(51) International Patent Classification (IPC):
**G06V 10/764** (2022.01)   **G06N 3/045** (2023.01)
**G06N 3/084** (2023.01)   **G06T 7/00** (2017.01)
**G06V 10/82** (2022.01)

(52) Cooperative Patent Classification (CPC):
**G06V 10/82; G06N 3/045; G06N 3/084;
G06T 7/0004; G06V 10/764**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.01.2024 KR 20240001795**

(71) Applicant: **Samsung Electronics Co., Ltd.
Suwon-si, Gyeonggi-do 16677 (KR)**

(72) Inventors:
• **KIM, Byungjai**
  **16678 Suwon-si (KR)**
• **KIM, Youngdong**
  **16678 Suwon-si (KR)**
• **LIM, Jongin**
  **16678 Suwon-si (KR)**
• **SUH, Sungjoo**
  **16678 Suwon-si (KR)**
• **HAN, Seungju**
  **16678 Suwon-si (KR)**

(74) Representative: **Arnold & Siedsma
Bezuidenhoutseweg 57
2594 AC The Hague (NL)**

(54) **METHOD, APPARATUS, AND SYSTEM WITH DOMAIN ADAPTATION-BASED CLASSIFICATION**

(57)   Provided is a method, apparatus, and system with domain adaptation-based AI model updates. A method includes generating an attention mask by generating a feature of an image and generating the attention mask dependent on the generated feature, generating an updated image classification model by adapting, dependent on the image and the attention mask, an image classification model to a domain of the image, executing the updated image classification model using the image, and determining a class of the image based on a result of the execution of the updated image classification device.

FIG. 2

Start

Generate spatial feature from input image — S110

Generate attention map set based on spatial feature — S120

Reconstruct image based on spatial feature — S130

Generate mask using attention map set — S140

Calculate loss function by masking difference between input image and reconstructed image — S150

Update image classification model based on loss function — S160

End

**Description**

BACKGROUND

1. Field

The present disclosure relates to a method, apparatus, and system with domain adaptation-based classification.

2. Description of the Related Art

Test-time adaptation is a technology for improving a classification performance of a domain shifted image, for example, when the image (the domain shifted image) of a different domain from a domain of an image used for training of an artificial intelligence classifier is input to an already trained artificial intelligence classifier. In general, an adaptation procedure for adapting the trained artificial intelligence classifier to the domain shifted image may be performed, so that parameters of an encoder of the artificial intelligence classifier are updated and then classification of the domain shifted image is performed.

SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.
In one general aspect, a processor-implemented method includes generating an attention mask based on a feature of an image, updating an image classification model by performing a domain adaptation on the image based on the attention mask, and determining a class of the image using updated image classification model.
Preferably, the domain of the input image is different from a source domain with which the image classification model was trained, the determined class is indicative of whether a defect is detected in the input image with respect to a semiconductor manufacturing process, and the image is captured by an inspection equipment in an in-fabrication environment.
Preferably, the generating of the attention mask includes generating a spatial feature by embedding the image into a latent space, and generating the attention mask based on the spatial feature.
Preferably, the encoder is an encoder of the image classification model.
Preferably, the updating of the image classification model includes calculating a loss by masking, using the attention mask, a difference between the image and a reconstructed image generated based on a decoding of the spatial feature, and updating the image classification model based on the loss.
Preferably, the encoder is an encoder of the image classification model, which may include the encoder and a classifier, and the updating of the image classification model based on the loss includes one of updating the image classification model by updating the encoder based on the loss without updating the classifier, and updating the image classification model by performing the updating of the encoder, and updating the classifier based on the loss or dependent on another image of the domain of the input image.
Preferably, the generating of the attention mask based on the spatial feature includes generating an attention map set that includes a plurality of attention maps generated based on the spatial feature, merging the plurality of attention maps, and generating the attention mask by performing sampling on a result of the merging.
Preferably, the encoder is an encoder of the image classification model, which includes the encoder and a classifier, and the plurality of attention maps are respective maps output by different layers of the classifier.
Preferably, the merging of the plurality of attention maps includes merging the plurality of attention maps into a merged attention map, as the result of the merging, by performing a rollout operation or a layer average operation on the plurality of attention maps.
Preferably, the performing of the sampling on the result of the merging includes performing a Bernoulli sampling or a threshold-based sampling on each patch of the result of the merging.
Preferably, the generating of the attention mask based on the spatial feature includes generating an attention vector based on the spatial feature, and generating the attention mask by performing sampling on a plurality of elements included in the attention vector.
Preferably, each of a plurality of elements corresponds to respective patches belonging to the spatial feature, and each of the plurality of elements are determined based on respective similarities between a reference feature of the spatial feature and respective features corresponding to the respective patches.
Preferably, for each of the plurality of elements, the respective similarities are cosine similarities between the reference feature and the respective features corresponding to the respective patches.

Preferably, the generating of the spatial feature by embedding the image into the latent space includes transforming the image, and generating the spatial feature by embedding the transformed image into the latent space.

In one general aspect, an apparatus includes one or more processors, and a memory storing instructions, which when executed by the one or more processors, configures the one or more processors to generate an attention mask based on a feature of an image, update an artificial intelligence, AI, model through a domain adaptation, dependent on the image and the attention mask, of an AI model to a domain of the image, and determine a class of the image using updated AI model.

Preferably, the AI model is trained based on images of a source domain, and the domain of the image may be different from the source domain.

Preferably, for the generating of the attention mask, the instructions are configured to cause the one or more processors to generate a spatial feature through an embedding of the image into a latent space using an encoder of the AI model, and generate the attention mask based on the spatial feature.

Preferably, for the domain adaptation of the AI model, the instructions are configured to cause the one or more processors to calculate a loss through a masking, using the attention mask, of a difference between the image and a reconstructed image generated based on a decoding of the spatial feature, and update the AI model based on the loss.

Preferably, for the generating of the attention mask based on the spatial feature, the instructions are configured to cause the one or more processors to generate an attention map set that may include a plurality of attention maps generated based on the spatial feature, merge the plurality of attention maps, and generate the attention mask by performing sampling on a result of the merging.

Preferably, for the generating of the attention mask based on the spatial feature, the instructions are configured to cause the one or more processors to generate an attention vector based on the spatial feature, and generate the attention mask by performing sampling a plurality of elements included in the attention vector.

Preferably, for the generating of the spatial feature through the embedding of the image into the latent space, the instructions are configured to cause the one or more processors to transform the image, and generate the spatial feature through an embedding of the transformed image into the latent space, where the AI model is an image classification model and further includes a classifier.

In one general aspect, a defect inspection system for a semiconductor manufacturing process includes one or more processors, and one or more memories storing an artificial intelligence (AI) model, trained based on source images of a source domain to classify a class of an input image provided to the AI model, and instructions that when executed by the one or more processors configures the one or more processors to generate an attention mask based on the input image acquired from an inspection equipment in an in-fabrication environment, update the AI model through a domain adaptation using the attention mask, and determine the class of the input image using the update AI model.

Preferably, for the updating of the AI model, the instructions are configured to cause the one or more processors to reconstruct the input image through a decoding of a spatial feature, of the input image, that is generated by the AI model, and update the AI model through a calculation of a loss using the input image, the reconstructed image, and the attention mask.

Preferably, for the calculating of the loss, the instructions are configured to cause the one or more processors to calculate the loss through a masking, using the attention mask, of a difference between the input image and the reconstructed image.

Other features and aspects will be apparent from the following detailed description, the drawings, and the claims.

BRIEF DESCRIPTION OF THE DRAWINGS

FIG. 1 illustrates an example computing system according to one or more embodiments.

FIG. 2 illustrates an example method of updating an image classification model through attention-based domain adaptation according to one or more embodiments.

FIG. 3 illustrates an example mask generator according to one or more embodiments.

FIG. 4 illustrates an example method of generating a mask according to one or more embodiments.

FIG. 5 illustrates an example updated classification model according to one or more embodiments.

FIG. 6 illustrates an example computing system according to one or more embodiments.

FIG. 7 illustrates an example method of updating an image classification model through attention-based domain adaptation according to one or more embodiments.

FIG. 8 illustrates an example mask generator according to one or more embodiments.

FIG. 9 illustrates an example method of generating a mask according to one or more embodiments.

FIG. 10 illustrates an example computing system of a semiconductor manufacturing process according to one or more embodiments.

FIG. 11 illustrates example input images of different domains according to one or more embodiments.

FIG. 12 illustrates an example neural network according to one or more embodiments.

FIG. 13 illustrates an example electronic device according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

As non-limiting examples, Artificial intelligence (AI) models of the present disclosure may be machine learning models that have been trained or learn at least one task. The AI models may be implemented through the execution of instructions by one or more processors, which may be configured to execute such, as well as other, instructions and which may be configured to perform operations of the AI models through the execution of the instructions. The task that the AI model learns may refer to a task to be solved through machine learning and/or a task to be executed through machine learning, though examples are not limited thereto. In examples, the AI models may be downloaded through a network, or may be sold as a product, by themselves or included within a product, such as in one or more memories of the product, where the product can be an electronic device or system, as non-limiting examples. Alternatively, all or portions of the AI model may be networked with or from a variety of electronic devices or systems. Further, while some below descriptions may refer to computing or electronic device examples, it is noted that such examples are also applicable to electronic systems. Below, AI models that are configured to perform at least a classification task will be referred to as a classification model, noting that embodiments are not limited thereto.

If a domain of an image is shifted (or changed), a characteristic of the image may be modified and an image classification model trained with images of different domain(s) may show a low classification performance for the domain shifted image.

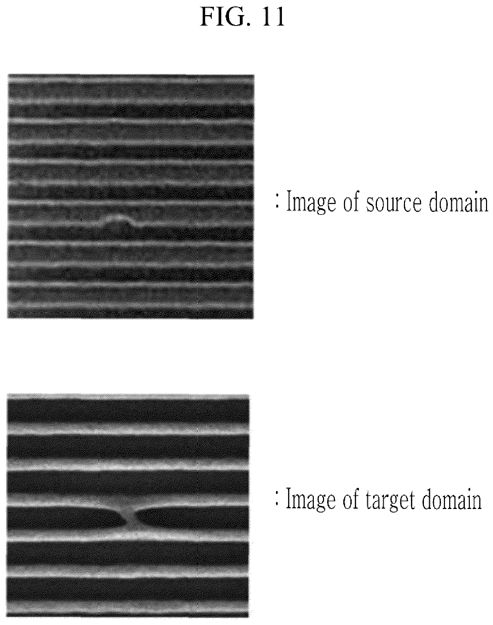

For example, when an image is input, such from an inspection equipment as a non-limiting example, an image classification model may be used to classify the image, objects, or features, aspects, or characteristics of the objects in the input image. However, there may be a difference between a domain (e.g., a 'target domain') of the input image and one or more source domains of source images, objects, or features, aspects, or characteristics of the objects in the source images, that were used to train of the image classification model. For example, FIG. 11 illustrates an example source image of a source domain of an object captured during a semiconductor manufacturing process, and the source image of the source domain (and/or predetermined images that correspond to the same) may have been used to train the image classification model. However, as further shown in FIG. 11, the input image may be of the target domain, which is different from the source domain. As a non-limiting example, the input image may be of the target domain due to a change of a generation of a product, an addition of a manufacturing step of the product, or the like, compared to when the image classification model was trained using source images (and/or predetermined images corresponding thereto) of one or more previous generations of the product, or other, previous, or replaced manufacturing steps of the product, or the like. Additionally or alternatively, as other non-limiting examples, the input image may be of the target domain due to: a change of a design of the semiconductor, compared to when the image classification model was trained using source images (and/or predetermined images corresponding thereto) of a previous design of the semiconductor; the addition and/or changes of inspection equipment, such as compared to when the image classification model was trained using source images (and/or predetermined images corresponding thereto) captured by other or previous inspection equipment; and/or the addition and/or change of inspection methods, such as compared to when the image classification model was trained using source images (and/or predetermined images corresponding thereto) captured or derived by other or previous inspection methods, or the like. While the input image may be of the target domain due to such changes, the input image based on such alternative or additional circumstances may also be of the target domain that existed prior to at the same time as images of such source images of the source domain(s). For example, a first test equipment may exist in a semiconductor manufacturing process and capture an input image of the target domain while an image classification model may have been trained based on, or corresponding to, source images of source domain(s) captured by (or corresponding to) one or more other test equipment in the same, like, or other semiconductor manufacturing process. As a non-limiting example, the classification model may be designed for defect detection and may classify an image and/or a portion(s) of the image as being defective or defects.

In one or more embodiments, an attention-based domain adaptation may be performed to update the image classification model, to be applicable or accurate with respect to the target domain of the input image. An effect of the domain adaptation may be reduced when there is a large difference between the target domain of the input image and the source domain(s) of source images, for example, that were used to train the image classification model. Accordingly, a domain adaptation model according to one or more embodiments may update the image classification model by performing attention-based domain adaptation on a region (i.e., one or more regions) that is robust to domain changes using attention information generated based on the input image. For example, the attention information may apply attention to a region that may improve a classification accuracy or performance of a performed classification of the image using an updated classification model, e.g., generated through an update of the classification model based on the attention information, compared to the use of the image classification model to perform classification of the input image.

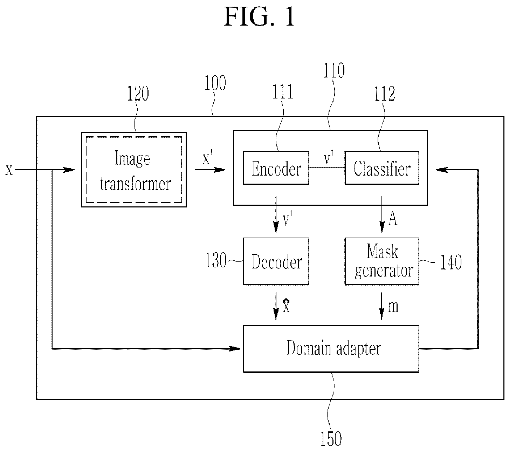

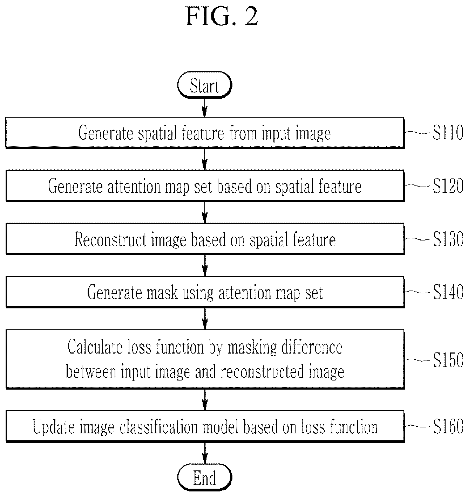

FIG. 1 illustrates an example computing system according to one or more embodiments, and FIG. 2 illustrates an example method of updating an image classification model through attention-based domain adaptation according to one or more embodiments.

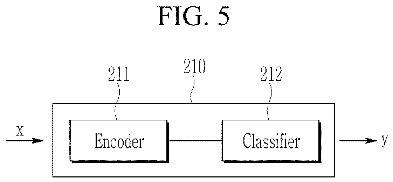

In one or more embodiments, a computing system 100 may perform attention-based domain adaptation for an input image, may update an image classification model based on the result of the attention-based domain adaptation, and may classify the input image into one class, for example, using the updated image classification model, such as the updated image classification model 210 of FIG. 5.

In one or more embodiments, before the attention-based domain adaptation is performed, an image classification model may be trained based on images of a source domain. The trained image classification model 110 may be updated (or adapted) for a new target domain different from the source domain through the attention-based domain adaptation using image(s) in the target domain, and then the computing system 100 may implement the updated image classification model to identify the class of the input image through an inference operation of the updated image classification model (e.g., based on the input image being input or provided to the updated image classification model). Through the attention-based domain adaptation, the updated image classification model can perform the classification task well not only for the images in the source domain but also for the images in the target domain.

Referring to FIG. 1, the computing system 100 according to one or more embodiments may include the image classification model 110, an image transformer 120, a decoder 130, a mask generator 140, and a domain adapter 150. The image classification model 110 may include an encoder 111 and a classifier 112, as non-limiting examples.

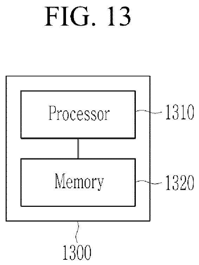

As respective non-limiting examples, herein, each of the encoder 111, the classifier 112, the image classification model 110, the decoder 130, the mask generator 140, the domain adapter 150, and the image transformer 120 may be respective, or any combination thereof, operations performed by one or more processors represented by the computing system 100. As non-limiting examples, the computing system 100 represents one or more processors, which may be the processor 1310 of the electronic device 1300 of FIG. 13. In addition, as respective non-limiting examples, each of, any respective combination of, or all of the encoder 111, the classifier 112, the image classification model 110, the decoder 130, the mask generator 140, the domain adapter 150, and the image transformer 120 may be representative of one or more processors, one or more non-transitory recording media or other memories storing respective instructions to cause one or more of the represented processors when executed by the one or more of the represented processors, and/or AI models (e.g., machine learning models, such as neural networks, as non-limiting examples) themselves or as respectively saved in/on such one or more non-transitory recording media or other memories. Further, a reference herein to one or more processors being configured to perform all or any combination of an encoding and/or use of the encoder 111, a classification and/or use of the classifier 112, an image classification and/or use of the image classification model 110, a decoding and/or use of the decoder 130, a mask generation and/or use of the mask generator 140, a domain adaption and/or use of the domain adapter 150, and/or an image transformation and use of the image transformer 120 is a reference to respective such operations or uses being performed by any one, any combination of the one or more processors represented by the computing system 100, or any respective one or more processors that are correspondingly represented by the encoder 111, the classifier 112, the image classification model 110, the decoder 130, the mask generator 140, the domain adapter 150, and the image transformer 120.

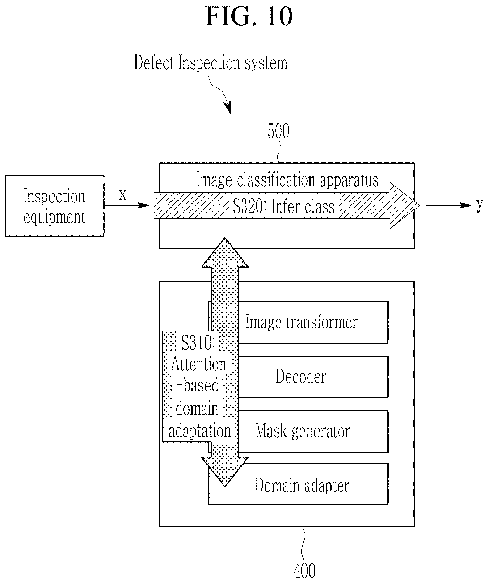

In one or more embodiments, the image classification model 110 may be pre-trained with images in the source domain. When an image is input to the computing system 100 (or captured by an image sensor or camera of an inspection equipment of the computing system 100, such as an image sensor or camera represented by the inspection equipment of FIG. 10), the image classification system 100 may perform the attention-based domain adaptation for the image classification model 110 by using the input image and then implement the updated image classification model to determine the class of the input image. Even if a domain of the input image is a different domain from the source domain, the updated image classification model may accurately classify the class of the input image through the attention-based domain adaptation.

On the other hand, the computing system 100 may further include a domain determiner 160) for determining whether the domain of the input image is the same as a training domain (or a source domain) of the image classification model 110. The domain determiner 160 may determine whether the domain adaptation needs to be performed based on the determining whether the domains are the same.

For example, when the domain determiner 160 determines that the input image belongs to the source domain, the image classification model 110 may classify the class of the input image, i.e., without the domain adaptation being performed or without using an updated image classification model that has resulted from performance of the domain adaption based on a previous image of another domain different from the source domain. On the other hand, when the domain determiner 160 determines that the input image belongs to the other domain different from the source domain, the computing system 100 may use the updated image classification model that resulted from the previous performance of the domain adaption to classify the input image, or perform the domain adaptation on the input image to generate the updated image classification model, and may then perform class classification on the input image using the updated image classification model. Thus, the computing system 100 may selectively use the image classification model 110, use the updated image classification model previously generated, or generate the updated image classification model, in which case the newly generated updated image classification model may be used to classify the input image.

Below, the computing system 100 may perform the attention-based domain adaptation on the input image and may determine the class of the input image using the updated domain-adapted image classification model. Because the computing system 100 performs the attention-based domain adaptation on the input image, parameter(s) of the image classification model 110 may be updated and the updated image classification model may be implemented and thereby infer the class of the input image.

Referring to FIG. 1 and FIG. 2, the encoder 111 of the image classification model 110 may be configured to generate a spatial feature of an image input to the encoder 111 by embedding the that image into a latent space. For example, the encoder 111 may have been trained to transform features of any image input to the encoder 111 into embedding vectors (e.g., as the spatial features) in the latent space, as a non-limiting example. For example, if the input image is of a same domain as the source domain and the image transformer 120 is not included (as in an example) or the transformer 120 or domain determiner 160 (which may be included in an example) outputs $x$, the encoder 111 may embed the input image $x$ into the latent space and generate a spatial feature ($v$), which may be input to the classifier 112 and which determines a class of the input image $x$ (S110). Thus, when operation S110 includes generating spatial feature $V$ based on image $x$, operations, the below discussed operation S120-S160 may be dependent on spatial feature $v$ having been generated by the encoder 111 instead of the spatial feature $v'$ as discussed below for explanatory purposes.

When the input image is unknown or of a different domain than the source domain, the encoder 111 may embed a transformed image $x'$ that is output by the image transformer 120, which was provided the input image $x$, to generate a spatial feature $v'$ from the transformed input image $x'$ (S110). The spatial feature v' generated by the encoder 111 may be transferred to the classifier 112, the decoder 130, and the mask generator 140. The classifier 112 of the image classification model 110 may receive the spatial feature $v'$ from the encoder 111 and may generate an attention map set A, based on the received spatial feature v' (S120). For example, in one or more embodiments, the attention map set may include the respective attention maps $a_i$ that were generated by one or more or each hidden layer of the classifier 112, and may include the classification information generated by the output layer by the classifier 112, such as in non-limiting examples where the classifier is a neural network. When there are n layers included in the classifier 112, the attention map set A may be expressed as Equation 1 below.

Equation 1:

$$A = \{a_1, a_2, \cdots, a_n\}$$

The image transformer 120 may transform the input image $x$ using a predetermined method. For example, the image transformer 120 may perform image augmentation on the input image $x$ or may perform a masking operation on the input image $x$. Alternatively, the image transformer 120 may transfer the input image $x$ as it is to the image classification model 110 without transforming (identity function). Referring to FIG. 1. the image transformer 120 is indicated as a dotted line to illustrate a case in which the image transformer 120 transfers the input image $x$ as it is to the image classification model 110 without transforming of the input image $x$, and the attention map set **A** may be generated by the classifier 112 based on spatial feature ($v$) generated by the encoder 111 based on the input image $x$.

The decoder 130 may decode the spatial feature $v'$ (or spatial feature ($v$) when the image transformer transfers the input image x as it is) received from the encoder 111 to reconstruct the input image $x$ (S130). In other words, the decoder 130 may reconstruct the input image $x$ from the spatial feature $v'$ to output the reconstructed image $\hat{x}$.

The mask generator 140 may generate a mask *m* providing an attention using the attention map set **A** received from the classifier 112 (S140). The mask *m* may be used to select a patch of the attention map set **A** that is robust to a shift (or a change) of the domain.

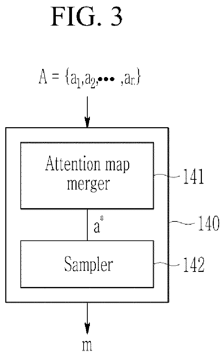

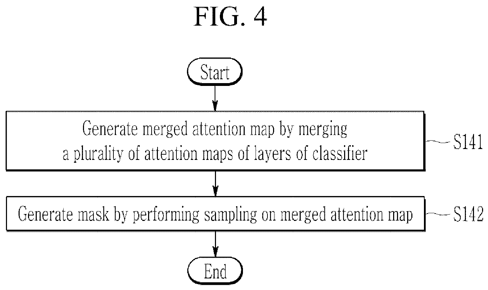

FIG. 3 illustrates an example mask generator according to one or more embodiments, and FIG. 4 illustrates an example method of generating a mask according to one or more embodiments. As a non-limiting example, the mask generator of FIG. 3 may correspond to the mask generator 140 of FIG. 1.

Referring to FIG. 3, the mask generator 140 according to one or more embodiments may include an attention map merger 141 and a sampler 142.

As respective non-limiting examples, herein, each of the attention map merger 141 and the sampler 142 may be respective, or any combination thereof, operations performed by one or more processors represented by the mask generator 140. In addition, as respective non-limiting examples, each of, any respective combination of, or all of the attention map merger 141 and the sampler 142 may be representative of one or more processors, one or more non-transitory recording media or other memories storing respective instructions to cause one or more of the represented processors when executed by the one or more of the represented processors, and/or AI models (e.g., machine learning models, such as neural networks, as non-limiting examples) themselves or as respectively saved in/on such one or more non-transitory recording media or other memories. Further, a reference herein to one or more processors being configured to perform all or any combination of a merging or and/or use of the attention map merger 141 and a sampling and/or use of the sampler 142 a reference to respective such operations or uses being performed by any one, any combination of the one or more processors represented by the mask generator 140, or any respective one or more processors that are correspondingly represented by the attention map merger 141 and the sampler 142.

Referring to FIG. 3 and FIG. 4, the attention map merger 141 may merge a plurality of attention maps included in the attention map set **A** to generate the merged attention map *a\** (S141). For example, the attention map merger 141 may merge the plurality of attention maps by performing rollout or a layer average.

The sampler 142 may generate the mask *m* by performing sampling on the merged attention map *a\** (S142). The sampler 142 may perform sampling based on a score of each patch of the merged attention map *a\**. For example, the sampler 142 may generate the mask by performing Bernoulli sampling on each patch of the merged attention map or performing thresholding on each patch of the merged attention map according to a predetermined value.

Referring back to FIG. 1 and FIG. 2, the domain adapter 150 may calculate a loss function by masking a difference (or a distance) between the input image *x* and the reconstructed image *x̂* received from the decoder 130 using the mask *m* generated by the mask generator 140 (S150). The domain adapter 150 may calculate the loss function shown in Equation 2.

Equation 2:

$$\text{Loss} = \sum_{i=0}^{N} m_i \cdot |\hat{x}_i - x_i|_2^2$$

In Equation 2, N represents the entire number of patches and i represents an index of each patch. In Equation 2, the loss function may be calculated by multiplying a L2 Norm value between an i-th patch of the reconstructed image *x̂* and an i-th patch of the input image *x̂* by a value of an i-th patch (*m_i*) of the mask *m*. As a non-limiting example, , *m_i* may be 0 or 1 in one or more embodiments. According to Equation 2, after the difference between the input image and the reconstructed image is masked by the mask, the masked differences may be all summed up so that the summed value is output as the result of the loss function. In other words, the domain adapter 150 may perform the domain adaptation on a region selected by the mask in the input image.

Thereafter, the computing system 100 may update the image classification model 110 based on the result of the loss function determined based on the input image, the reconstructed image, and the mask (S160).

Because the image classification model 110 is updated based on the result of the loss function determined based on the input image, the reconstructed image, and the mask, the domain adaptation based on an attention may be completed and then the updated image classification model may classify the input image used for the domain adaptation. That is, the attention may mean focusing on the difference between the input image and the reconstructed image, and can be achieved by the AI learning scheme through the mask.

In one or more embodiments, the updated image classification model may be generated by the computing system 100 updating parameters (e.g., weights or weighted connections) of the encoder 111 of the image classification model 110 through the attention-based domain adaptation, without updating parameters (e.g., weights or weighted connections) of the classifier 112. In one or more embodiments, the updated image classification model may be generated by the computing system 100 updating the parameters of the classifier 112 by performing few shot adaptation using a different image of the same target domain as that of the input image.

The computing system 100 according to one or more embodiments may update the encoder 111 of the image classification model 110 by performing the attention-based domain adaptation (a first domain adaptation) on the input image and may update the classifier 112 of the image classification model 110 by performing the few shot adaptation (a second domain adaptation) using the different image of the same domain as that of the input image. Thereafter, the computing system 100 may classify the class of the input image using the updated image classification model.

In one or more embodiments, in the attention-based domain adaptation for the input image, the computing system 100 may generate the mask using the attention map set generated by the encoder 111 and the classifier 112 and may update parameters of the encoder 111 based on the loss function calculated by using the generated mask.

In addition, in the few shot adaptation for the input image, the computing system 100 may generate a feature of a labeled image of the same domain as that of the input image, may perform classification based on the generated feature, and may update the classifier 112 based on the loss function calculated by using the classification result and a label of the input image.

FIG. 5 illustrates an example updated classification model according to one or more embodiments.

As respective non-limiting examples, herein, each of the encoder 211 and the classifier 212 may be respective, or any combination thereof, operations performed by one or more processors represented by the updated image classification model 210. As non-limiting examples, the updated image classification model 210 may be further included in and implemented by the computing system 100 of FIG. 1, the computing system 100 of FIG. 1 without the decoder 130, the mask generator 140, the domain adaptor 150, and the image transformer 120, or another computer system, and may represent one or more processors, which may be the processor 1310 of the electronic device 1300 of FIG. 13. In addition, as respective non-limiting examples, each of, any respective combination of, or all of the encoder 211 and the classifier 212 may be representative of one or more processors, one or more non-transitory recording media or other memories storing respective instructions to cause one or more of the represented processors when executed by the one or more of the represented processors, and/or AI models (e.g., machine learning models, such as neural networks, as non-limiting examples) themselves or as respectively saved in/on such one or more non-transitory recording media or other memories. Further, a reference herein to one or more processors being configured to perform all or any combination of an encoding and/or use of the encoder 211 and a classification and/or use of the classifier 212 is a reference to respective such operations or uses being performed by any one, any combination of the one or more processors represented by the updated image classification model 210, or any respective one or more processors that are correspondingly represented by the encoder 211 and the classifier 212.

Referring to FIG. 5. the updated image classification model 210 may classify the class of the input image that was used for the attention-based domain adaptation to generate the updated image classification model 210. The updated image classification model 210 may classify the class of another input image of the same domain (i.e., different from the source domain) as the image that was used to generate the updated image classification model 210. The updated image classification model 210 may also classify the class of still another input image of the source domain.

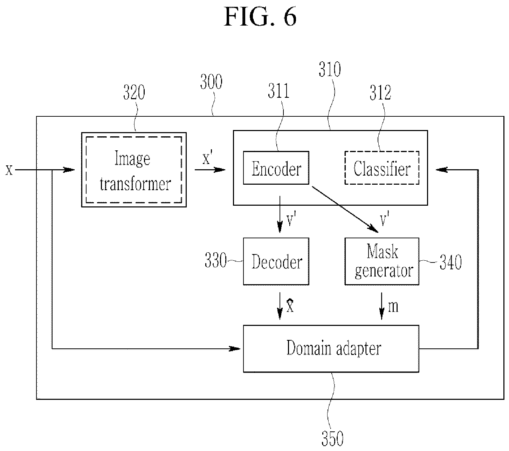

In one or more embodiments, an encoder 211 may or may not have been updated (e.g., updated from the encoder 111 of FIG. 1 or encoder 311 of FIG. 6) through the attention-based domain adaptation described herein through FIGS. 1-13 and may generate a spatial feature from the input image, and a classifier 212 may infer a class y of the input image based on the spatial feature generated by the encoder 211.

For example, the classifier 212 may be the same as the classifier 112 of FIG. 1 or classifier 311 of FIG. 6., i.e., the classifier 212 may not have been updated through the attention-based domain adaptation. Alternatively, the classifier 212 may have been updated (e.g., updated from the classifier 112 of FIG. 1 or classifier 311 of FIG. 6) through the attention-based domain adaptation and/or the few shot adaptation, and the classifier 212 may be used to infer the class of the input image.

In one or more embodiments, the computing system 100 of FIG. 1 (or computing systems 300 or 510 of FIGS. 6 and 10, as discussed further below), for example, may perform the attention-based domain adaptation on the input image using the image classification model 110, the image transformer 120, the decoder 130, the mask generator 140, and the domain adapter 150 and may implement (i.e., perform an inference operation of) the updated image classification model 210 updated through the attention-based domain adaptation to determine the class of the input image using. For example, when the attention-based domain adaptation is performed to generate the updated image classification model 210, the computing system 100 (or computing systems 300 or 510) may save the updated image classification model 210 in a memory of the computing system 100 (or computing systems 300 or 510), such as the memory 1320 of FIG. 13. In an example, the updated image classification model 210 may be saved to the computing systems 100 (or computing systems 300 or 510) and replace the image classification model 110 (or image classification models 310 or 500). When the class of the non-source input image is inferred by the implementation of the updated image classification model 210 by the computing system 100 (or computing systems 300 or 510), the image transformer, the decoder, the mask generator, and the domain adapter are not used. Examples herein also include examples with one or more processors and memories (such as illustrated in FIG. 13) with the updated image classification model 210 without the image transformer, the decoder, the mask generator, and the domain adapter, for example.

As described above, the computing system 100 may perform the attention-based domain adaptation on the input image using the mask generated from the attention map of the input image, so that the class of the input image is successfully classified even if a domain of the input image is different from the source domain or the domain of the input image is unknown.

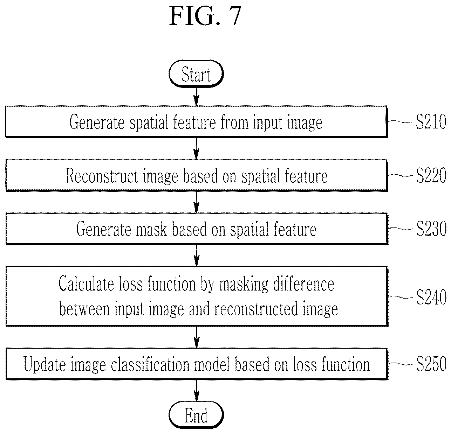

FIG. 6 illustrates an example computing system according to one or more embodiments, and FIG. 7 illustrates an example method of updating an image classification model through attention-based domain adaptation according to one or more embodiments.

Referring to FIG. 6, the computing system 300 according to one or more embodiments may include an image classification model 310, an image transformer 320, a decoder 330, a mask generator 340, and a domain adapter 350. The image classification model 310 may include an encoder 311 and a classifier 312. In an example, the computing system 300 may further include a domain determiner 360. As a non-limiting example, the image classification model 310 may be the same as the image classification model 110.

As respective non-limiting examples, herein, each of the encoder 311, the classifier 312, the image classification model 310, the decoder 330, the mask generator 340, the domain adapter 350, and the image transformer 320 may be respective, or any combination thereof, operations performed by one or more processors represented by the computing system 300, or by the one or more processors represented by the computing system 100 of FIG. 1. As non-limiting examples, the computing system 300 represents one or more processors, which may be the processor 1310 of the electronic device 1300 of FIG. 13. In addition, as respective non-limiting examples, each of, any respective combination of, or all of the encoder 311, the classifier 312, the image classification model 310, the decoder 330, the mask generator 340, the domain adapter 350, and the image transformer 320 may be representative of one or more processors, one or more non-transitory recording media or other memories storing respective instructions to cause one or more of the represented processors when executed by the one or more of the represented processors, and/orAI models (e.g., machine learning models, such as neural networks, as non-limiting examples) themselves or as respectively saved in/on such one or more non-transitory recording media or other memories. Further, a reference herein to one or more processors being configured to perform all or any combination of an encoding and/or use of the encoder 311, a classification and/or use of the classifier 312, an image classification and/or use of the image classification model 310, a decoding and/or use of the decoder 330, a mask generation and/or use of the mask generator 340, a domain adaption and/or use of the domain adapter 350, and an image transformation and/or use of the image transformer 320 is a reference to respective such operations or uses being performed by any one, any combination of the one or more processors represented by the computing system 300, or any respective one or more processors that are correspondingly represented by the encoder 311, the classifier 312, the image classification model 310, the decoder 330, the mask generator 340, the domain adapter 350, and the image transformer 320.

The computing system 300 may perform attention-based domain adaptation on an input image to generate an updated image classification model (e.g., the updated image classification model 210 of FIG. 5) through the attention-based domain adaptation and may determine a class of the input image using the updated image classification model. Because the computing system 300 performs the attention-based domain adaptation on the input image, parameters of the encoder 311 of the image classification model 310 may be updated to generate the updated image classification model, and then the class of the input image may be determined by the updated image classification model.

Referring to FIG. 6 and FIG. 7, the encoder 311 of the image classification model 310 may generate a spatial feature ($v$) by embedding the input image $x$ into a latent space (S210). The encoder 311 may output the spatial feature $v$ from the input image $x$ regardless of a domain of the input image $x$. When an image $x'$ transformed by the image transformer 320 is input to the encoder 311, the encoder 311 may generate a spatial feature $v'$ from the transformed input image $x'$. The spatial feature $v'$ (or the alternatively utilized spatial feature $v$ when operations S210 - S250 are performed dependent on spatial feature $v$ when the input image $x$ is not transformed, as discussed above with respect to FIGS. 1 and 2) may include N patches. The spatial feature $v'$ generated by the encoder 311 may be transferred to the decoder 330 and the mask generator 340.

In one or more embodiments embodiment, the image transformer 320 may transform the input image using a predetermined method. For example, the image transformer 320 may perform image augmentation on the input image, or may perform a masking operation on the input image. Alternatively, the image transformer 320 may transfer the input image as it is to the image classification model 310 without transforming the input image.

In an embodiment, the decoder 330 may reconstruct the input image $x$ by decoding the spatial feature $v'$ received from the encoder 311 (S220). In other words, the decoder 330 may reconstruct the input image x from the spatial feature $v'$ to output the reconstructed image $\hat{x}$.

In an embodiment, the mask generator 340 may generate a mask (or an attention mask) $m$ that may provide an attention based on the spatial feature $v'$ received from the encoder 311 (S230). The mask $m$ may be used to select a patch that is robust to a shift (or a change) of the domain.

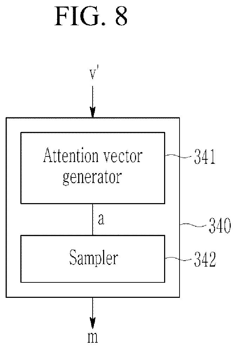

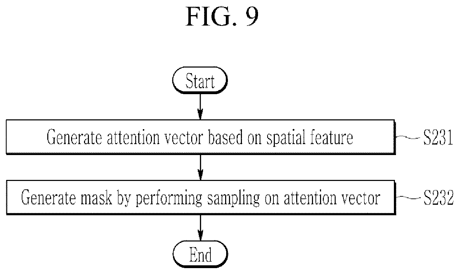

FIG. 8 illustrates an example mask generator according to one or more embodiments, and FIG. 9 illustrates an example method of generating a mask according to one or more embodiments. As a non-limiting example, the mask generator of FIG. 8 may correspond to the mask generator 340 of FIG. 1.

Referring to FIG. 8, the mask generator 340 according to one or more embodiments may include an attention vector generator 341 and a sampler 342.

As respective non-limiting examples, herein, each of the attention vector generator 341 and the sampler 342 may be respective, or any combination thereof, operations performed by one or more processors represented by the mask generator 340. In addition, as respective non-limiting examples, each of, any respective combination of, or all of the attention vector generator 341 and the sampler 342 may be representative of one or more processors, one or more non-transitory recording media or other memories storing respective instructions to cause one or more of the represented processors when executed by the one or more of the represented processors, and/or AI models (e.g., machine learning models, such as neural networks, as non-limiting examples) themselves or as respectively saved in/on such one or more non-transitory recording media or other memories. Further, a reference herein to one or more processors being configured to perform all or any combination of attention vector generation or and/or use of the attention vector generator 341 and a sampling and/or use of the sampler 342 is a reference to respective such operations or uses being performed by any one, any combination of the one or more processors represented by the mask generator 340, or any respective one or more processors that are correspondingly represented by the attention vector generator 341 and the sampler 342.

Referring to FIG. 8 and FIG. 9, the attention vector generator 341 may generate an attention vector $\alpha$ based on the spatial feature $v'$ generated by the encoder 311 (S231). Equation 3 may represent the attention vector $\alpha$ generated from the spatial feature $v'$.

Equation 3:

$$\boldsymbol{a} = \{s_1, s_2, \cdots, s_n\}$$

Referring to Equation 3, the attention vector $\boldsymbol{a}$ may include a plurality of elements ($s_k$) (wherein k is a random integer between 1 and n), and each of the plurality of elements included in the attention vector may correspond to the patch belonging to the spatial feature. Each element of the attention vector may be determined based on similarity between a reference feature of the spatial feature $\boldsymbol{v'}$ and a feature corresponding to the patch belonging to the spatial feature $\boldsymbol{v'}$.

In an embodiment, the encoder 311 or the mask generator 340 may determine the reference feature of the spatial feature $\boldsymbol{v'}$ using various methods. For example, the reference feature of the spatial feature $\boldsymbol{v'}$ may be determined as an average value of features of each patch of the spatial feature $\boldsymbol{v'}$, and a method for determining the reference feature of the spatial feature $\boldsymbol{v'}$ is not limited thereto.

In an embodiment, the similarity ($s_k$) between a k-th feature ($f_k$) corresponding to a k-th patch of the spatial feature $\boldsymbol{v'}$ and the reference feature ($f_{cls}$) may be determined as in Equation 4 below.

Equation 4:

$$s_k = \frac{f_{cls} \cdot f_k}{\|f_{cls}\| \|f_k\|}$$

In Equation 4, $s_k$ may represent cosine similarity between the k-th feature ($f_k$) and the reference feature ($f_{cls}$). However, a method for calculating the similarity between the feature corresponding to the patch of the spatial feature and the reference feature is not limited thereto.

In an embodiment, the sampler 342 may generate the mask $\boldsymbol{m}$ by performing sampling on the attention vector $\alpha$ (S232). The sampler 342 may perform sampling based on a size of each element of the attention vector $\boldsymbol{a}$. For example, the sampler 342 may generate the mask by performing Bernoulli sampling on each element of the attention vector or performing thresholding on each element of the attention vector according to a predetermined value. In an embodiment, a binary mask may be generated by assigning 1 to a sampled element of the attention vector and assigning 0 to a non-sampled element.

Referring back to FIG. 6 and FIG. 7, the domain adapter 350 may calculate a loss function by masking a difference (or a distance) between the input image $\boldsymbol{x}$ and the reconstructed image $\hat{\boldsymbol{x}}$ received from the decoder 330 using the mask $\boldsymbol{m}$ generated by the mask generator 340 (S240). The domain adapter 350 may calculate a result of the loss function of Equation 2 to perform the domain adaptation on a region selected by the mask in the input image.

Thereafter, the computing system 300 may update the image classification model 310 based on the loss function determined based on the input image, the reconstructed image, and the mask (S250). Based on the loss function calculated according to the input image, the reconstructed image, and the mask, the encoder 311 of the image classification model 310 may be updated to complete the domain adaptation based on an attention, and then the updated image classification model 310 may classify the input image used for the domain adaptation.

In an embodiment, when the attention-based domain adaptation is performed on the input image, the classifier 312 of the image classification model 310 may not be updated. Even if the mask is generated based on the spatial feature generated by the encoder 311 and the encoder 311 of the image classification model 310 is updated based on a result of the domain adaptation performed on a portion (e.g., the patch of the image) selected by the mask, the classifier 312 of the image classification model 310 may not be updated.

In this case, in order to improve a classification performance for the input image even if the input image does not belong to a source domain of the image classification model 310, the computing system 300 may update the classifier 312 of the image classification model 310 by performing few shot adaptation using at least one sheet of the same domain image within the same domain as that of the input image. The image classification model 310 that includes the classifier 312 updated through the few shot adaptation and the encoder 311 updated through the attention-based domain adaptation may successfully classify the input image that does not belong to the source domain.

As described above, the computing system 300 may perform the attention-based domain adaptation on the input image using the mask generated from the attention vector of the input image, so that the class of the input image is successfully classified even if the domain of the input image is changed.

FIG. 10 illustrates an example computing system of a semiconductor manufacturing process according to one or more embodiments, and FIG. 11 illustrates example input images of different domains according to one or more embodiments.

In one or more embodiments, the in-fabrication environment of the semiconductor manufacturing process, a domain adaptation model 400 may update the image classification model 500 by performing test-time adaptation on an image *x* transferred from an inspection equipment. The test-time adaptation may be performed in real-time when an input image is of a manufactured product that has been generated in the real-time, and thus an image classification model may be adapted at the test-time, though the test-timing of the adaptation herein is not limited thereto. The image classification model 500 updated through the test-time adaptation may infer a class of the image *x.* The domain adaptation model 400 may perform the attention-based domain adaptation that is a test-time adaptation mechanism for the input image.

The domain adaptation model 400 may perform the test-time adaptation when the image is transferred from the inspection equipment of a semiconductor and may allow the image classification model 500 to be adapted to the domain of the transferred image even if the domain of the image is not always the same or the domain of the image is unknown.

When the image classification model 500 is trained based on an image of a source domain, the image input from the inspection equipment may be the image of the source domain or an image of a target domain that is different from the source domain. The image classification model 500 may accurately classify a class of the input image through the test-time adaptation during the semiconductor manufacturing process even if images of any domain are input.

A change of a domain of the input image (e.g., a change from the source domain to the target domain) may occur due to a change of a generation of a product, an addition of a manufacturing step of the product, or the like. Alternatively, the change of the domain may occur due to a change of a design of the semiconductor, addition/change of the inspection equipment, addition/change of an inspection method, or the like. If the change of the domain of the input image occurs during the manufacturing process of the semiconductor, the domain adaptation model 400 according to one or more embodiments may update the image classification model 500 through the attention-based domain adaptation, and the updated image classification model 500 may accurately classify the class of the input image.

Referring to FIG. 10 and FIG. 11, when the image is input from the inspection equipment, the domain adaptation model 400 according to one or more embodiments may update the image classification model 500 by performing the attention-based domain adaptation (S310). Because an effect of the domain adaptation may be reduced when a difference between the domain of the input image and the source domain to which an image used for training of the image classification model 500 belongs is large, the domain adaptation model 400 according to one or more embodiments may update the image classification model 500 by performing the attention-based domain adaptation on a region robust to a change of a domain in the input image.

A mask generator of the domain adaptation model 400 may generate an attention mask based on the input image. The mask generated from an attention for the input image by the mask generator may allow the domain adaptation to be selectively performed on the region robust to the change of the domain.

A classifier of the image classification model 500 trained based on the image of the source domain may generate an attention map set from the input image, and the attention map set generated by the classifier may be used as the attention for the input image. The attention map may represent the region robust to the change of the domain, and may represent a region that may improve a classification performance for the image. The mask generator may generate a mask that may perform an attention by merging a plurality of attention maps within the set generated by the classifier and performing sampling on the merged attention map.

Alternatively, an encoder of the image classification model 500 trained based on the image of the source domain may generate a spatial feature from the input image, and the spatial feature generated by the encoder may be used to generate the attention for the input image. The mask generator may generate an attention vector from the spatial features generated by the encoder, and may generate the attention mask by performing sampling on an element of the attention vector.

In one or more embodiments, a domain adapter of the domain adaptation model 400 may perform the domain adaptation on a region selected by the mask in the input image.

Referring to FIG. 10 and FIG. 11, the domain adaptation model 400 may perform the attention-based domain adaptation using a decoder, the mask generator, and the domain adapter, and may update the image classification model 500. The domain adaptation model 400 may further use an image transformer for the attention-based domain adaptation.

As respective non-limiting examples, herein, each of the image classification model 500, the domain adaption model 400, the decoder, the mask generator, the domain adapter, and the image transformer of FIG. 10 may be respective, or any combination thereof, operations performed by one or more processors represented by a computing system 510 that may include the image classification model 500 and the domain adaption model 400. The computing system 510 may further include inspection equipment 520, which may include a camera 525, or the inspection equipment 520 may be separate from the computing system 510. As non-limiting examples, the computing system 510 may be the processor 1310 of the electronic device 1300 of FIG. 13. In addition, as respective non-limiting examples, each of, any respective combination of, or all of the image classification model 500, the decoder, the mask generator, the domain adapter, the image transformer, and the domain adaption model 400 may be representative of one or more processors, one or more non-transitory recording media or other memories storing respective instructions to cause one or more of the represented processors when executed by the one or more of the represented processors, and/or AI models (e.g., machine learning models, such as neural networks, as non-limiting examples) themselves or as respectively saved in/on such one or more non-transitory recording media or other memories. Further, a reference herein to one or more processors being configured to perform all or any combination of image classification and/or use of the image classification model 500, a decoding and/or use of the decoder, a mask generation and/or use of the mask generator, a domain adaption and/or use of the domain adapter, and an image transformation and/or use of the image transformer is a reference to respective such operations or uses being performed by any one, any combination of the one or more processors represented by the computing system 510, or any respective one or more processors that are correspondingly represented by the image classification model 500, the decoder, the mask generator, the domain adapter, and the image transformer. In a non-limiting example, the image classification model 500 may be representative of an image classification apparatus 500 (e.g., comprising one or more processors and/or one or memories), which may be separate from the domain adaption model 400 that may be representative of a domain adaption apparatus 400 (e.g., comprising one or more processors and/or one or memories).

Thereafter, the image classification model 500 updated through the attention-based domain adaptation may determine the class *y* of the input image *x* (S320). That is, in a step of inferring the class of the input image, configurations (e.g., the image transformer, the decoder, the mask generator, and the domain adaptor) of the domain adaptation model 400 used for the attention-based domain adaptation may not be used.

As described above, in the fab environment of the manufacturing process, the domain adaptation model 400 may update an artificial intelligence (AI) model through the attention-based domain adaptation without additional training for a classification model, and the updated AI model may classify the class of the input image.

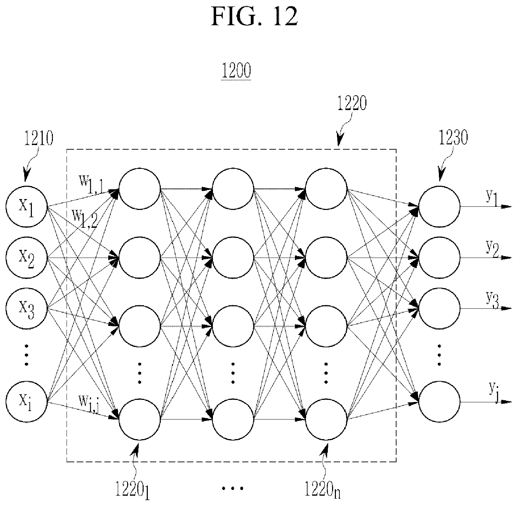

FIG. 12 illustrates an example neural network according to one or more embodiments.

Referring to FIG. 12, any one, combination, or all of the AI models described herein with respect to any one, combination, or all of FIGS. 1-11 may be implemented by one or more neural networks, noting that embodiments are not limited to the same and other machine learning or AI trained model approaches are also available in embodiments. The neural network 1200 according to one or more embodiments may include an input layer 1210, a hidden layer 1220, and an output layer 1230. Each of the input layer 1210, the hidden layer 1220, and output layer 1230, which are each representative of one or more layers of the same, may each include a respective set of nodes, and strength of connections between nodes within or between layers may correspond to respective weight values. These connections may also be referred to weighted connections. Any of the set nodes respectively included in each of the input layer 1210, the hidden layer 1220, and the output layer 1230 may be fully or partially connected to nodes of the same and/or other layers input layer 1210, the hidden layer 1220, and the output layer 1230 k. In one or more embodiments, a total number of parameters (e.g., weight values and bias values) of the neural network 1200 may be equal to the total number of connections between the nodes of the neural network 1200.

The input layer 1210 may include a set of input nodes $x_1$ to $x_i$, and the number of input nodes $x_1$ to $x_i$ may correspond to the number of independent input variables. For training of the neural network 1200, a training set may be input to the input layer 1210 and a training result (e.g., a class) may be output from the output layer 1230, a loss may be calculated based on the training result, and the neural network 1200 may be trained by adjusting some or all of the weights of any one, combination, or all layers of the neural network 1200 (e.g. of the hidden layer 1220 and the output layer 1230), until the training result has a predetermined accuracy and/or predetermined inaccuracy. Once the neural network is trained, if a test dataset is input to the input layer 1210 of the trained neural network 1200, an inference result (e.g., a class) may be output from the output layer 1230 of the trained artificial neural network 1200. In one or more embodiments, the input layer 1210 may have a structure suitable for processing large-scale inputs.

The hidden layer 1220 may be disposed between the input layer 1210 and the output layer 1230, and may include at least one hidden layer or $1220_1$ to $1220_n$ hidden layers, as noted above. The output layer 1230 may include at least one output node or $y_1$ to $y_j$ output nodes. Activation function may be used in the hidden layer(s) 1220 and the output layer 1230.

FIG. 13 illustrates an example electronic device according to one or more embodiments.

Any or any combination of the above computing systems and/or operations respectively described above may be implemented by an electronic device and/or a non-transitory computer-readable medium. Referring to FIG. 13, electronic device 1300 includes a processor 1310 and a memory 1320 (the processor 1310 is representative of any single processor or any combination of processors, e.g., a CPU, a GPU, an accelerator, etc.). The memory 1320 may be connected to the processor 1310 to store various information for driving the processor 1310 or at least one program executed by the processor 1310.

The processor 1310 may be configured to implement any one, combination, or all functions, processes, and/or methods described herein.

The memory 1320 may represent one or more memories which may be disposed inside and/or outside the processor 1310, and the memory 1320 may be connected to the processor 1310 through a bus, for example. The memory 1320 may be a volatile or nonvolatile storage medium of various forms, and for example, the memory 1320 may include a read-only memory (ROM) or a random access memory (RAM).

The memory 1320 may store instructions (e.g., programs, source code, executable instructions, machine code, etc.) that when executed by the processor 1310 configure (e.g., cause) the processor 1310 to perform any one, combination, or all functions, processes, and/or methods described above with respect to FIGS. 1-12. The memory 1320 may include or be a non-transitory computer-readable medium (i.e., not a signal per se) that stores such instructions. An embodiment also exists with the memory 1320 without processor 1310

The computing systems, apparatuses, the electronic devices, the processors, the memories, the encoders, classifiers, decoders, mask generators, domain adaptors, image transformers, domain determiners, attention vector generators, samplers, inspection equipment, cameras, and other apparatuses, devices, and components described herein with respect to FIGS. 1-13 are implemented by or representative of hardware components in various embodiments. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-13 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims are to be construed as being included in the disclosure.

**Claims**

1.  A processor-implemented method, comprising:

    generating an attention mask based on a feature of an image;
    updating an image classification model by performing a domain adaptation on the image based on the attention mask; and
    determining a class of the image using the updated image classification model.

2.  The method of claim 1,

    wherein the domain of the input image is different from a source domain with which the image classification model was trained,
    wherein the determined class is indicative of whether a defect is detected in the input image with respect to a semiconductor manufacturing process, and
    the image is captured by an inspection equipment in an in-fabrication environment.

3.  The method of claim 1 or 2, wherein the generating of the attention mask comprises:

    generating a spatial feature by embedding the image into a latent space; and
    generating the attention mask based on the spatial feature;
    preferably wherein the encoder is an encoder of the image classification model.

4.  The method of any one of the preceding claims, wherein the updating of the image classification model comprises:

    calculating a loss by masking, using the attention mask, a difference between the image and a reconstructed image generated based on a decoding of the spatial feature; and
    updating the image classification model based on the loss.

5.  The method of claim 3 or 4,

    wherein the encoder is an encoder of the image classification model, which comprises the encoder and a classifier, and
    wherein the updating of the image classification model based on the loss comprises one of:
    updating the image classification model by updating the encoder based on the loss without updating the classifier; and

        updating the image classification model by performing the updating of the encoder, and
        updating the classifier based on the loss or dependent on another image of the domain of the input image.

6.  The method of any one of claims 3 - 5, wherein the generating of the attention mask based on the spatial feature comprises:

    generating an attention map set comprising a plurality of attention maps generated based on the spatial feature;
    merging the plurality of attention maps; and
    generating the attention mask by performing sampling on a result of the merging.

7.  The method of claim 6,

    wherein the encoder is an encoder of the image classification model, which comprises the encoder and a classifier, and
    wherein the plurality of attention maps are respective maps output by different layers of the classifier;
    preferably, wherein the merging of the plurality of attention maps comprises merging the plurality of attention maps into a merged attention map, as the result of the merging, by performing a rollout operation or a layer average operation on the plurality of attention maps; and/or
    preferably, wherein the performing of the sampling on the result of the merging comprises performing a Bernoulli sampling or a threshold-based sampling on each patch of the result of the merging.

8. The method of any one of claims 3 - 7, wherein the generating of the attention mask based on the spatial feature comprises:

generating an attention vector based on the spatial feature; and
generating the attention mask by performing sampling on a plurality of elements included in the attention vector.

9. The method of claim 8,

wherein each of a plurality of elements corresponds to respective patches belonging to the spatial feature, and
wherein each of the plurality of elements are determined based on respective similarities between a reference feature of the spatial feature and respective features corresponding to the respective patches;
preferably wherein, for each of the plurality of elements, the respective similarities are cosine similarities between the reference feature and the respective features corresponding to the respective patches.

10. The method of any one of claim 3 - 9, wherein the generating of the spatial feature by embedding the image into the latent space comprises:

transforming the image; and
generating the spatial feature by embedding the transformed image into the latent space.

11. An apparatus, comprising:

one or more processors; and
a memory storing instructions, which when executed by the one or more processors, configures the one or more processors to:

generate an attention mask based on a feature of an image;
update an artificial intelligence, AI, model through a domain adaptation, dependent on the image and the attention mask, of an AI model to a domain of the image; and
determine a class of the image using updated AI model.

12. The apparatus of claim 11, wherein the AI model is trained based on images of a source domain, and the domain of the image is different from the source domain.

13. The apparatus of claim 11 or 12, wherein, for the generating of the attention mask, the instructions are configured to cause the one or more processors to:

generate a spatial feature through an embedding of the image into a latent space using an encoder of the AI model; and
generate the attention mask based on the spatial feature.

14. The apparatus of claim 13, wherein, for the domain adaptation of the AI model, the instructions are configured to cause the one or more processors to:

calculate a loss through a masking, using the attention mask, of a difference between the image and a reconstructed image generated based on a decoding of the spatial feature; and
update the AI model based on the loss; and/or

wherein, for the generating of the attention mask based on the spatial feature, the instructions are configured to cause the one or more processors to:

generate an attention map set comprising a plurality of attention maps generated based on the spatial feature;
merge the plurality of attention maps; and

generate the attention mask by performing sampling on a result of the merging; and/or
wherein, for the generating of the attention mask based on the spatial feature, the instructions are configured to cause the one or more processors to:

generate an attention vector based on the spatial feature; and

generate the attention mask by performing sampling a plurality of elements included in the attention vector; and/or

wherein, for the generating of the spatial feature through the embedding of the image into the latent space, the instructions are configured to cause the one or more processors to:

transform the image; and

generate the spatial feature through an embedding of the transformed image into the latent space.

15. A defect inspection system for a semiconductor manufacturing process, the system comprising:

one or more processors; and

one or more memories storing an artificial intelligence, AI, model, trained based on source images of a source domain to classify a class of an input image provided to the AI model, and instructions that when executed by the one or more processors configures the one or more processors to:

generate an attention mask based on the input image acquired from an inspection equipment in an in-fabrication environment;

update the AI model through a domain adaptation using the attention mask; and

determine the class of the input image using the updated AI model; wherein:

preferably, for the updating of the AI model, the instructions are configured to cause the one or more processors to:

reconstruct the input image through a decoding of a spatial feature, of the input image, that is generated by the AI model; and

update the AI model through a calculation of a loss using the input image, the reconstructed image, and the attention mask; and/or

preferably, for the calculating of the loss, the instructions are configured to cause the one or more processors to calculate the loss through a masking, using the attention mask, of a difference between the input image and the reconstructed image.

# FIG. 1

# FIG. 2

```
                    ( Start )
                        │
                        ▼
┌─────────────────────────────────────────────┐
│   Generate spatial feature from input image   │──── S110
└─────────────────────────────────────────────┘
                        │
                        ▼
┌─────────────────────────────────────────────┐
│ Generate attention map set based on spatial feature │──── S120
└─────────────────────────────────────────────┘
                        │
                        ▼
┌─────────────────────────────────────────────┐
│   Reconstruct image based on spatial feature   │──── S130
└─────────────────────────────────────────────┘
                        │
                        ▼
┌─────────────────────────────────────────────┐
│     Generate mask using attention map set      │──── S140
└─────────────────────────────────────────────┘
                        │
                        ▼
┌─────────────────────────────────────────────┐
│     Calculate loss function by masking difference │
│   between input image and reconstructed image   │──── S150
└─────────────────────────────────────────────┘
                        │
                        ▼
┌─────────────────────────────────────────────┐
│ Update image classification model based on loss function │──── S160
└─────────────────────────────────────────────┘
                        │
                        ▼
                     ( End )
```

# FIG. 3

$$A = \{a_1, a_2, \cdots, a_r\}$$

Attention map merger — 141

$a^*$ — 140

Sampler — 142

m

# FIG. 4

Start

Generate merged attention map by merging
a plurality of attention maps of layers of classifier ~ S141

Generate mask by performing sampling on merged attention map ~ S142

End

# FIG. 5

# FIG. 6

# FIG. 7

```
                        ( Start )
                            │
                            ▼
    ┌─────────────────────────────────────────────┐
    │   Generate spatial feature from input image  │──── S210
    └─────────────────────────────────────────────┘
                            │
                            ▼
    ┌─────────────────────────────────────────────┐
    │   Reconstruct image based on spatial feature │──── S220
    └─────────────────────────────────────────────┘
                            │
                            ▼
    ┌─────────────────────────────────────────────┐
    │   Generate mask based on spatial feature     │──── S230
    └─────────────────────────────────────────────┘
                            │
                            ▼
    ┌─────────────────────────────────────────────┐
    │  Calculate loss function by masking difference│
    │  between input image and reconstructed image  │──── S240
    └─────────────────────────────────────────────┘
                            │
                            ▼
    ┌─────────────────────────────────────────────┐
    │ Update image classification model based on loss function │──── S250
    └─────────────────────────────────────────────┘
                            │
                            ▼
                        ( End )
```

# FIG. 8

v'

Attention vector generator —341

a

340

Sampler —342

m

# FIG. 9

```
           ( Start )
               |
               v
  +----------------------------------------------+
  | Generate attention vector based on spatial feature |--- S231
  +----------------------------------------------+
               |
               v
  +----------------------------------------------+
  | Generate mask by performing sampling on attention vector |--- S232
  +----------------------------------------------+
               |
               v
           ( End )
```

# FIG. 10

Defect Inspection system

500

| Image classification apparatus |
| Inspection equipment | x → | S320: Infer class | → y |

S310: Attention -based domain adaptation

Image transformer

Decoder

Mask generator

Domain adapter

400

# FIG. 11

: Image of source domain

: Image of target domain

# FIG. 12

# FIG. 13

Processor ~1310

Memory ~1320

1300

Europäisches
Patentamt

European
Patent Office

Office européen
des brevets

# EUROPEAN SEARCH REPORT

**Application Number**

EP 25 15 0243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/237272 A1 (ASML NETHERLANDS BV [NL]) 14 December 2023 (2023-12-14) * paragraphs [0052], [0071], [0082] * ----- | 1-15 | INV. G06V10/764 G06N3/045 G06N3/084 |
| A | US 2020/134455 A1 (CHOI YOUNG-JOON [KR] ET AL) 30 April 2020 (2020-04-30) * the whole document * ----- | 1-15 | G06T7/00 G06V10/82 |

| | |
|---|---|
| | **TECHNICAL FIELDS SEARCHED (IPC)** |
| | G06V G06N G06T |

The present search report has been drawn up for all claims

| Place of search | Date of completion of the search | Examiner |
|---|---|---|
| The Hague | 21 May 2025 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 25 15 0243

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2025

| Patent document cited in search report | Publication date | Patent family member(s) | | Publication date |
|---|---|---|---|---|
| WO 2023237272 A1 | 14-12-2023 | CN | 119325622 A | 17-01-2025 |
| | | IL | 317181 A | 01-01-2025 |
| | | KR | 20250025615 A | 24-02-2025 |
| | | TW | 202414490 A | 01-04-2024 |
| | | WO | 2023237272 A1 | 14-12-2023 |
| US 2020134455 A1 | 30-04-2020 | KR | 20200052453 A | 15-05-2020 |
| | | US | 2020134455 A1 | 30-04-2020 |

EPO FORM P0459

For more details about this annex : see Official Journal of the European Patent Office, No. 12/82